# EUROPÄISCHE PATENTSCHRIFT

(11) **EP 1 545 767 B1**
(45) Veröffentlichungstag und Bekanntmachung des Hinweises auf die Patenterteilung: **14.04.2010**
(21) Anmeldenummer: 03798903.5
(22) Anmeldetag: 12.09.2003
(51) Int. Cl.: B01J 21/16, C08G 61/12, C08G 65/26

(54) **Katalysator und Verfahren zur Polymerisation cyclischer Ether an diesem Katalysator**
Catalyst and method for the polymerisation of cyclic ethers on said catalyst
Catalyseur et procédé de polymérisation d'ethers cycliques sur ledit catalyseur

(30) Priorität: 27.09.2002 DE 10245198
(43) Veröffentlichungstag der Anmeldung: 29.06.2005
(73) Patentinhaber: BASF SE, 67056 Ludwigshafen (DE)
(72) Erfinder: SCHLITTER, Stephan, 67117 Limburgerhof (DE); HAUBNER, Martin, 69124 Eppelheim (DE); HESSE, Michael, 67549 Worms (DE); KÄSHAMMER, Stefan, 67105 Schifferstadt (DE); PINKOS, Rolf, 67098 Bad Dürkheim (DE); SIGWART, Christoph, 69198 Schriesheim (DE)
(86) Internationale Anmeldenummer: PCT/EP2003/010149
(87) Internationale Veröffentlichungsnummer: WO 2004/030811

(56) Entgegenhaltungen:
- WO-A-03/002631
- DE-A- 2 247 530
- DE-A- 2 801 578
- DE-A- 19 527 532
- DE-B- 1 173 442
- FR-A- 915 458

## Beschreibung

Die vorliegende Erfindung betrifft einen verbesserten festen, sauren Katalysator zur ringöffnenden Polymerisation cyclischer Ether. Weiterhin betrifft die vorliegende Erfindung ein Verfahren zur Herstellung von Polytetrahydrofuran oder Polytetrahydrofuran-Derivaten an solchen Katalysatoren sowie ein Verfahren zur Herstellung solcher Katalysatoren durch Säureaktivierung.

Polytetrahydrofuran (im folgenden "PTHF"), auch Polyoxybutylenglykol genannt, ist in der Kunststoff- und Kunstfaserindustrie ein vielseitiges Zwischenprodukt und wird unter anderem als Diolkomponente zur Herstellung von Polyurethan-, Polyester- und Polyamid-Elastomeren verwendet. Daneben ist es -wie auch manche seiner Derivate- in vielen Anwendungsfällen ein wertvoller Hilfsstoff, z.B. als Dispergiermittel oder beim Entfärben ("Deinken") von Altpapier.

PTHF wird technisch üblicherweise durch Polymerisation von Tetrahydrofuran (im folgenden "THF") an geeigneten Katalysatoren in Gegenwart von Reagenzien hergestellt, deren Zugabe die Steuerung der Kettenlänge der Polymerketten und so die Einstellung des mittleren Molekulargewichts ermöglicht (Kettenabbruchreagenzien oder "Telogene"). Die Steuerung erfolgt dabei durch Wahl von Art und Menge des Telogens. Durch Wahl geeigneter Telogene können zusätzlich funktionelle Gruppen an einem Ende oder beiden Enden der Polymerkette eingeführt werden.

So können z.B. durch Verwendung von Carbonsäuren oder Carbonsäureanhydriden als Telogene die Mono- oder Diester von PTHF hergestellt werden. Erst durch anschließende Verseifung oder Umesterung entsteht PTHF selbst. Daher wird diese Herstellung als zweistufiges PTHF-Verfahren bezeichnet.

Andere Telogene wirken nicht nur als Kettenabbruchreagenzien, sondern werden auch in die wachsende Polymerisatkette von PTHF eingebaut. Sie haben nicht nur die Funktion eines Telogens, sondern sind gleichzeitig ein Comonomer und können daher mit gleicher Berechtigung sowohl als Telogene wie auch als Comonomere bezeichnet werden. Beispiele für solche Comonomere sind Telogene mit zwei Hydroxygruppen, wie die Dialkohole. Dies können beispielsweise Ethylenglykol, Propylenglykol, Butylenglykol, 1,3-Propandiol, 1,4-Butandiol, 2-Butin-1,4-diol, 2,2-Dimethyl-1,3-propandiol, 1,6-Hexandiol oder niedermolekulares PTHF sein.

Weiterhin sind als Comonomere cyclische Ether, bevorzugt drei-, vier- und fünfgliedrige Ringe, wie 1,2-Alkylenoxide, z.B. Ethylenoxid oder Propylenoxid, Oxetan, substituierte Oxetane, wie 3,3-Dimethyloxetan, sowie THF-Derivate wie z.B. 3-Methyltetrahydrofuran, 3,3-Dimethyltetrahydrofuran oder 3,4-Dimethyltetrahydrofuran geeignet.

Die Verwendung solcher Comonomere bzw. Telogene führt mit Ausnahme von Wasser, 1,4-Butandiol und niedermolekularem PTHF zur Herstellung von Tetrahydrofuran-Copolymeren - im folgenden THF-Copolymere genannt- und ermöglicht es auf diese Weise, PTHF chemisch zu modifizieren.

Technisch läßt sich PTHF einstufig durch THF-Polymerisation mit Wasser, 1,4-Butandiol oder niedermolekularem PTHF als Telogen an sauren Katalysatoren herstellen. Als Katalysatoren sind sowohl homogene, im Reaktionssystem gelöste Systeme als auch heterogene, d.h. weitgehend ungelöste Systeme, bekannt. Nachteilig sind jedoch die relativ geringen THF-Umsätze, die vor allem bei der Synthese von PTHF des Molekulargewichts 650 bis 3000 erreicht werden.

Großtechnisch werden überwiegend die oben erwähnten zweistufigen Verfahren durchgeführt, bei denen THF z.B. in Gegenwart von Fluorsulfonsäure zunächst zu Polytetrahydrofuran-Estern polymerisiert und anschließend zu PTHF hydrolysiert wird. Üblicherweise werden bei dieser Form der THF-Polymerisation höhere THF-Umsätze als bei einstufigen Verfahren erzielt. Vorteilhaft ist vor allem die THF-Polymerisation in Gegenwart von Carbonsäureanhydriden, wie z.B. Acetanhydrid in Gegenwart saurer Katalysatoren zu PTHF-Diacetaten und die anschließende Umesterung der PTHF-Diacetate z.B. mit Methanol zu PTHF und Methylacetat.

Die in der Anmeldung bevorzugte Herstellung von PTHF durch THF-Polymerisation in Gegenwart von Carbonsäureanhydriden bzw. die Herstellung von THF-Copolymeren durch THF-Polymerisation in Gegenwart von Carbonsäureanhydriden und cyclischen Ethern als Comonomeren an festen sauren Katalysatoren ist bekannt.

In der DE-A-28 01 578 wird ein Verfahren zur Herstellung von PTHF-Diacetaten aus THF in Gegenwart von Carbonsäureanhydriden und einer Bleicherde mit einem Wassergehalt < 3 Gew.-% als Katalysator beschrieben.

In der DE-A-198 01 462 werden säureaktivierte Calcium-Montmorillonite mit einer spezifischen Oberfläche von mindestens 300 m²/g, einer Acidität von mindestens 0,02 mmol/g für pKs-Werte < -3 und Porenvolumina von mindestens 0,4 cm³/g für Porengrößen im Bereich von 30 - 200 A als Katalysatoren in Pulver- oder Strangform für die THF-Polymerisation zu u. a. PTHF-Diacetaten beschrieben.

Die US-A-4,228,272 beschreibt eine Methode zur Herstellung von Copolymeren aus THF und Alkylenoxiden an säureaktivierten Montmorilloniten mit Porenvolumina von 0,4 - 0,8 cm³/g, durchschnittlichen Porengrößen im Bereich von 0,1 - 0,3 µm und einer Oberfläche von 220 - 260 m²/g.

In der DE-A1-197 554 15 wird PTHF an einem Katalysator mit einem hohen Anteil an Montmorillonit hergestellt. Für die Herstellung des Katalysators wird Montmorillonit für 0,5-24 h bei einer Temperatur von 30-120°C einer Säure der Konzentration 2-100 % ausgesetzt. Der Katalysator wird bei 80-200°C getrocknet und bei 150-600°C calciniert und zeigt eine BET-Oberfläche von mindestens 150 m2/g.

In der US 6,274,527 wird ein Katalysator auf Basis von säureaktiviertem algerischen Bentoniten offenbart. Der spezielle Rohton wird für bis zu 3 Tagen bei Raumtemperatur bzw. 1 - 2 h bei erhöhten Temperaturen mit Schwefelsäure einer Konzentration von 0,1 - 0,9 mol/l aktiviert, filtriert, gewaschen und getrocknet.

Die US 4,127,513 beschreibt die Herstellung von PTHF-Copolymeren an säureaktivierten Montmorilloniten, die eine Säurezentrendichte von 0,1 - 0,9 mmol/g bei Säurestärken (pKs) im Bereich -3 bis -8 zeigen. Der Rohton wird hierbei mit Säuren der Konzentration 15 - 40 % bevorzugt bei Raumtemperatur umgesetzt, um diese speziellen Aciditätseigenschaften zu erhalten.

Verfahren zur Herstellung von säureaktivierten Tonmineralien, insbesondere Schichtsilikaten, sind ebenfalls bekannt; einen Überblick gibt die EP-B 398 636 und die darin zitierten Publikationen. Säureaktivierte Bentonite werden in großem Maßstab als Bleicherden zum Entfärben, von Ölen eingesetzt.

Die Katalysatoren gemäß dem Stand der Technik zeigen eine nur relativ geringe Aktivität, was in einer technischen Anlage sehr große Reaktorvolumina und/oder sehr lange Reaktionszeiten bedingt. Die Wirtschaftlichkeit eines heterogen-katalysierten Verfahrens zur Polymerisation cyclischer Ether, insbesondere von THF, hängt daher entscheidend von der Produktivität des Katalysators ab. Der vorliegenden Erfindung lag daher die Aufgabe zugrunde, einen hochaktiven Katalysator für die Herstellung von Polytetrahydrofuran, Polytetrahydrofuran-Copolymeren, Diestern oder Monoestern dieser Polymere bereitzustellen.

Die Aufgabe wird erfindungsgemäß durch einen festen, sauren Katalysator für die Herstellung von Polytetrahydrofuran, Polytetrahydrofuran-Copolymeren, Diestern oder Monoestern dieser Polymere durch Polymerisation von Tetrahydrofuran in Gegenwart mindestens eines Telogens und/oder Comonomers gelöst, der eine BET-Oberfläche von mindestens 160 m²/g, bevorzugt mindestens 220 m²/g und besonders bevorzugt mindestens 260 m²/g, und eine Säurezentrendichte von mindestens 0,25 mmol/g, für pKs-Werte von 1 bis 6, bevorzugt im Bereich von 2,5 bis 5,5, aufweist.

Der Katalysator enthält eine Gesamtmenge von alkalilöslichem und nicht alkalilöslichem SiO₂ von mindestens 20 Gew.-% , bevorzugt mindestens 30 Gew.-%. insbesondere 50 bis 90 Gew.-% sowie mindestens ein weiteres Oxid eines Elementes ausgewählt aus der Elementgruppe Al, Fe sowie den Gruppen III A bis VII A des Periodensystems (Gruppenbezeichnung gemäß alter IUPAC-Nomenklatur), bevorzugt ausgewählt aus der Elementgruppe Al, Fe, Ti und Zr. Weiterhin enthält der Katalysator einen Anteil an alkalilöslichem SiO₂ (amorphe Kieselsäure) von 20 bis 85 Gew.-%, bevorzugt 25 bis 75 Gew.-%, insbesondere 30 bis 65 Gew.-%.

Weiterhin weist der Katalysator ein Porenvolumen (BJH-N₂-Isotherme) von mindestens 0,35 cm³/g und bevorzugt von mindestens 0,45 cm³/g im Bereich der Porendurchmesser von 2 bis 200 nm auf. Das Porenvolumen im Bereich der Porendurchmesser von 5 bis 50 nm liegt bei mindestens 0,2 cm³/g, bevorzugt mindestens 0,25 cm³/g. Der gemittelte BJH-Porendurchmesser (4V/A) der Poren von 2 bis 200 nm liegt bei 2,0 bis 10,0 nm, bevorzugt 3,5 bis 9 nm.

Als Rohstoff für den erfindungsgemäßen Katalysator werden bevorzugt Tonminerale der Montmorillonit-Saponit-Gruppe oder Palygorskit-Sepiolith-Gruppe, besonders bevorzugt Montmorillonite wie sie beispielsweise in Klockmanns Lehrbuch der Mineralogie, 16. Auflage, F. Euke Verlag 1978, Seiten 739 - 765 beschrieben werden, verwendet. Montmorillonit-haltige Materialien werden auch als Bentonite oder gelegentlich als Fuller-Erden bezeichnet.

Prinzipiell kommen als Tonmineralquellen alle Montmorillonit-haltigen Lagerstätten in Frage wie sie zum Beispiel in der Monographie "The Economics of Bentonite", 8th Edition 1997, Roskill Information Services Ltd, London gelistet sind. Oftmals enthalten die Rohtone neben Montmorillonit noch weitere mineralische und nichtmineralische Bestandteile. An mineralischen Bestandteilen können beispielsweise Quarz, Feldspat, Kaolin, Muskovit, Zeolithe sowie Titanoxide, Eisenoxide, Calcit und/oder Gips in unterschiedlichen Mengen enthalten sein. Bevorzugt als Rohstoffe sind solche mit einem hohen Montmorillonit-Gehalt und entsprechend einem geringen Gehalt an Nebenbestandteilen. Der Montmorillonit-Gehalt kann beispielsweise über die Bestimmung der Methylenblau-Adsorption bestimmt werden.

Bevorzugte Rohstoffe zeigen einen Methylenblauwert von mindestens 250 mg/g, bevorzugt mindestens 290 mg/g, insbesondere mindestens 320 mg/g. Besonders bevorzugt als Rohstoffe sind solche, deren austauschfähige Kationen zu einem hohen Prozentsatz aus Alkalimetallen, insbesondere Natrium bestehen. Bezogen auf Ladungsäquivalente enthalten diese Rohstoffe mindestens 25 % bevorzugt mindestens 40 % einwertige austauschbare Kationen. Diese Natrium-Bentonite als Rohstoffe kommen in der Natur vor, bekannte Quellen für Natrium-haltige Bentonite liegen z.B. in Wyoming/USA oder in Indien, sie sind auch nach ihrer Herkunft als "Western Bentonites", "Wyoming bentonites" oder nach den Eigenschaften als "swelling Benonites" bekannt. Bentonite mit einem hohen Anteil an Erdalkali-Kationen, insbesondere Calcium sind beispielsweise als "Subbentonite" oder "Southern Bentonites" bekannt und können durch eine alkalische Aktivierung zu Natrium-haltigen Bentoniten umgesetzt werden. Auch solche alkalisch aktivierten Rohstoffe sind für erfindungsgemäße Katalysatoren geeignet. Schließlich ist es prinzipiell auch möglich, geeignete Rohstoffe synthetisch herzustellen.

Tonminerale natürlichen Ursprungs enthalten gelegentlich noch nichtmineralische Verunreinigungen, insbesondere Kohlenstoffverbindungen. Als Katalysatorrohstoff bevorzugt sind solche Bentonite, die einen Gesamt-Kohlenstoffgehalt von weniger als 3 Gew.-%, bevorzugt weniger als 1 Gew.-% besonders bevorzugt weniger als 0,5 Gew.-% enthalten.

Der Katalysator wird erfindungsgemäß hergestellt, in dem das Tonmineral entweder in stückiger oder in Pulverform einer Säureaktivierung unterworfen wird. Während dieser Aktivierung werden mindestens 50 %, bevorzugt mindestens 60 % und besonders bevorzugt mindestens 70 % der eingesetzten Säure umgesetzt. Bezogen auf den Katalysatorrohstoff werden 3 bis 15, bevorzugt 4,5 bis 12, besonders bevorzugt 5 bis 10 Milliäquivalente Säure pro Gramm (meq/g) eingesetztem Rohton umgesetzt. Unter Äquivalent (eq) einer Substanz ist diejenige Stoffmenge, die einer definierten Reaktion, sich mit einer solchen Menge Wasserstoff vereinigt bzw. diesen freisetzt bzw. ersetzt, wie an 3 g Kohlenstoff in ¹²CH₄ gebunden sind, zu verstehen. Diese Angaben beziehen sich auf einen getrockneten Rohton hoher Reinheit, d.h. mit einem Glühverlust von 15 - 20 % und einem Methylenblauwert von 300 - 400 mg/g. Bei feuchteren oder trockeneren Rohtonen oder geringerer Reinheit beispielsweise durch Beimengungen von Fremdmineralien muss die pro Tonmenge eingesetzte und umgesetzte Säuremenge entsprechend angepasst werden. Das Optimum der bei der Aktivierung umgesetzten Säuremenge wird für den jeweiligen Rohstoff bevorzugt durch Vorversuche ermittelt.

Zur Aktivierung können anorganische oder organische Säuren eingesetzt werden. Bevorzugt werden Salzsäure und/oder Schwefelsäure eingesetzt oder Gemische aus Salzsäure und/oder Schwefelsäure mit anderen anorganischen oder organischen Säuren.

Der Anteil an Rohton an der Aktivierungssuspension liegt bei 2 bis 50 Gew.-%, bevorzugt 5 bis 40 Gew.-% und besonders bevorzugt bei 10 bis 30 Gew.-%. Höhere Rohton-Konzentrationen sind wirtschaftlich vorteilhaft, die obere Grenze wird durch die Viskosität der Aktivierungssuspension gegeben.

Bei der bevorzugten Verwendung von Schwefelsäure zur Aktivierung liegen die Säureumsätze der Aktivierung bei 50 bis 90 %, bevorzugt 60 bis 80 %; bei der ebenfalls bevorzugten Verwendung von Salzsäure zur Aktivierung liegen die Umsätze bei 70 bis 100 %, bevorzugt 85 bis 95 %.

Die insgesamt einzusetzende Säuremenge kann aus dem Anteil an Rohton in der Aktivierungssuspension sowie dem gewünschten prozentualen und absoluten Säureumsatz leicht berechnet werden. Die zur Aktivierung eingesetzte Säure kann zu Beginn der Aktivierung vorgelegt bzw. zugegeben werden, oder bevorzugt in mehreren Schritten zu Beginn und während der Aktivierung. Durch die bevorzugte Zugabe der Säure in mehreren Schritten liegt die Säure am Anfang der Aktivierung in einer geringeren Konzentration vor, als dies bei Zugabe der gesamten Säuremenge zu Beginn der Aktivierung der Fall wäre. Die Konzentration an Säure zu Beginn der Aktivierung liegt bei weniger als 4 eq/kg Suspension, bevorzugt weniger als 2,5 eq/kg Suspension und besonders bevorzugt bei 0,5 bis 1,5 eq/kg Suspension.

Entscheidend für die Auswahl der Kombination aus Temperatur und Zeit zur erfolgreichen Durchführung des erfindungsgemäßen Verfahrens ist das Erreichen der erfindungsgemäßen Säureumsätze. Bevorzugt werden Temperaturen mindestens 60°C bei Aktivierungszeiten mindestens 4 h, besonders Temperaturen mindestens 70°C bei Aktivierungszeiten mindestens 24 h und besonders bevorzugt Temperaturen mindestens 80°C bei Aktivierungszeiten mindestens 36 h eingesetzt.

Nach Abschluss der Säureaktivierung wird der Katalysator nach dem Fachmann bekannten Methoden von der Mutterlauge abgetrennt und von anhaftenden Säureresten befreit. Hierzu kann die Aktivierungssuspension zunächst durch beispielsweise Filtrieren, Zentrifugieren oder Absetzen und Dekantieren vom größten Teil der Mutterlauge getrennt werden, wobei Filtrieren und Zentrifugieren bevorzugt sind. Anschließend wird der Katalysator durch Waschen mit einem Lösungsmittel, bevorzugt demineralisiertem Wasser, von der restlichen Mutterlauge und anhaftenden Säureresten befreit. Der Waschprozess kann kontinuierlich, beispielsweise in Filterpressen, oder diskontinuierlich, beispielsweise durch wiederholtes Suspendieren / Dekantieren erfolgen. Das Waschmedium kann durch geringe Säurezusätze einen leicht sauren pH-Wert erhalten, um die Adsorption basischer Spurenkomponenten aus dem Waschmedium auf den Katalysator zu vermindern. Bevorzugt wird hierzu wässrige Salpetersäure mit einem pH-Wert von 2 - 5 eingesetzt. Die Waschzeiten können durch höhere Temperaturen des Lösungsmittels verkürzt werden. Gegen Ende des Waschprozesses anfallendes gering kontaminiertes Waschmedium kann zum Beginn des Auswaschens einer weiteren Charge wieder verwendet werden.

Der Katalysator enthält nach dem Auswaschen bevorzugt wenig oder keine freie Säure, d.h. es finden sich wenig oder keine Reste der zur Aktivierung eingesetzten Säure mehr im Katalysator. Bevorzugt liegen weniger als 20 %, besonders bevorzugt weniger als 5 % der gesamten sauren Zentren in Form freier Säure auf dem Katalysator vor. Der Anteil freier Säure auf dem Katalysator kann durch das Auswaschen auf erfindungsgemäße Werte verringert werden.

Nach Abtrennen und Auswaschen der Mutterlauge wird der Katalysator getrocknet, ggf. bei erhöhter Temperatur und/oder vermindertem Druck und/oder durch Durchströmen mit trockenen Gasen wie Luft oder Stickstoff und/oder durch Anmaischen und Sprühtrocknen. Bevorzugt wird der Katalysator bei Temperaturen von 30°C bis 200°C, gegebenenfalls unter vermindertem Druck getrocknet. Anschließend kann der Katalysator bei Temperaturen von 150°C bis 800°C, bevorzugt 250°C bis 600°C calciniert werden.

Der Katalysator kann in Pulverform oder bevorzugt als Formkörper in der Polymerisationsreaktion eingebracht werden. Die Herstellung von Formkörpern aus pulverförmigen Rohstoffen kann durch dem Fachmann bekannte Methoden wie beispielsweise Tablettierung, Agglomeration oder Extrusion erfolgen, wie sie u.a. im Handbook of Heterogenous Catalysis, Vol. 1, VCH Verlagsgesellschaft Weinheim, 1997, S. 414-417 beschrieben sind. Bei der Verformung können dem Fachmann bekannte Hilfsstoffe wie Binder, Schmierstoffe und/oder Lösungsmittel zugesetzt werden. Es ist sowohl möglich, den Rohton zu verformen und als Formkörper zu aktivieren, als auch eine Aktivierung von Pulvern durchzuführen und das aktivierte Pulver zu verformen. Schließlich ist es auch möglich, stückiges Rohmaterial zu aktivieren und in dieser Form als Katalysator zu verwenden.
Die Säureaktivierung von pulverförmigen Rohstoffen und ggf. anschließende Verformung ist bevorzugt.

Die erfindungsgemäßen Katalysatoren können für die Polymerisation z.B. in Form von Tabletten, Strängen, Kugeln, Ringen oder Splitt eingesetzt werden. Geeignete Formkörper und ihre Herstellung sind in der DE 10130782 beschrieben. Bevorzugt werden als Formkörper Tabletten, Stränge oder Kugeln verwendet. Bei Kugeln werden Durchmesser von 0,1 bis 10 mm, bevorzugt 0,3 bis 5 mm genutzt. Tabletten werden bevorzugt mit Durchmessern von 1 bis 5 mm und Höhen von 1 bis 3 mm eingesetzt. Bei Strängen (Extrudaten) werden solche mit einem Durchmesser im Bereich 0,5 - 4 mm, bevorzugt 1-3 mm verwendet. Das Verhältnis von Länge zu Durchmesser der bevorzugten Extrudate beträgt üblicherweise 20 : 1 bis 0,5 : 1, bevorzugt 5 : 1 bis 1 : 1. Neben zylinderförmigen Extrudaten können beispielsweise auch Hohlstränge, Rippstränge, Sternstränge oder andere dem Fachmann bekannte Extrudatformen eingesetzt werden.

Als Vorbehandlung des Katalysators vor dem Einsatz in der Polymerisations-Reaktion kommen beispielsweise das Trocknen mit auf 80 bis 200°C, bevorzugt auf 100 bis 150°C erwärmten Gasen, wie z.B. Luft oder Stickstoff, in Frage.

Als Telogene eignen sich bei der Herstellung von PTHF-Estern Carbonsäureanhydride oder Carbonsäureanhydrid/Carbonsäure-Gemische. Unter diesen sind aliphatische und aromatische Poly- und/oder Monocarbonsäuren bzw. deren Anhydride, die 2 bis 12 Kohlenstoffatome enthalten, bevorzugt. Beispiele für bevorzugte Telogene sind Essigsäureanhydrid, Propionsäureanhydrid, Bernsteinsäure- und Maleinsäureanhydrid ggf. in Gegenwart der entsprechenden Säuren. Insbesondere ist Essigsäureanhydrid als Telogen bevorzugt.

Die bei der Verwendung der bevorzugten Telogene entstehenden PTHF-Acetate lassen sich mit verschiedenen Verfahren in PTHF überführen beispielsweise durch das in US 4,460,796 beschriebene Verfahren.

Andere Copolymere von THF lassen sich herstellen durch die zusätzliche Verwendung von cyclischen Ethern als Comonomere, die sich ringöffnend polymerisieren lassen, bevorzugt drei-, vier- und fünfgliedrige Ringe, wie 1,2-Alkylenoxide, z.B. Ethylenoxid oder Propylenoxid, Oxetan, substituierte Oxetane, wie 3,3-Dimethyloxetan, sowie THF-Derivate wie 3-Methyltetrahydrofuran, 3,3-Dimethyltetrahydrofuran oder 3,4-Dimethyltetrahydrofuran, wobei 3-Methyltetrahydrofuran besonders bevorzugt ist.

Das Telogen und gewünschtenfalls das Comonomer wird zweckmäßigerweise in THF gelöst der Polymerisation zugeführt. Da das Telogen zum Kettenabbruch bzw. zur Kettenübertragung in der Polymerisation führt, läßt sich über die eingesetzte Telogenmenge das mittlere Molekulargewicht des Polymers steuern. Je mehr Telogen im Reaktionsgemisch enthalten ist, desto niedriger wird das mittlere Molekulargewicht des PTHF oder des betreffenden PTHF-Derivates. Je nach Telogengehalt der Polymerisationsmischung können PTHF, die betreffenden PTHF-Derivate bzw. THF-Copolymere mit mittleren Molekulargewichten von 250 bis 10000 Dalton gezielt hergestellt werden. Vorzugsweise werden mit dem erfindungsgemäßen Verfahren PTHF, die betreffenden PTHF-Derivate bzw. THF-Copolymere mit mittleren Molekulargewichten von 500 bis 5000 Dalton, besonders bevorzugt von 650 bis 4000 Dalton hergestellt.

Die Polymerisation wird im allgemeinen bei Temperaturen von 0 bis 80°C, vorzugsweise von 25°C bis zur Siedetemperatur des THF, durchgeführt. Der angewandte Druck ist in der Regel für das Ergebnis der Polymerisation nicht kritisch, weshalb im allgemeinen bei Atmosphärendruck oder unter dem Eigendruck des Polymerisationssystems gearbeitet wird. Ausnahmen hiervon bilden Copolymerisationen von THF mit den leichtflüchtigen 1,2-Alkylenoxiden, die vorteilhafterweise unter Druck ausgeführt werden. Üblicherweise beträgt der Druck 0,1 bis 20 bar, bevorzugt 0,5 bis 2 bar.

Zur Vermeidung der Bildung von Etherperoxiden wird die Polymerisation vorteilhaft unter einer Inertgasatmosphäre vollzogen. Als Inertgase können z.B. Stickstoff, Kohlendioxid oder die Edelgase dienen, bevorzugt wird Stickstoff verwendet.

Besonders vorteilhaft ist die Ausführung der Polymerisation unter einer Wasserstoffatmosphäre. Diese Ausführungsform bewirkt eine besonders niedrige Farbzahl der entstehenden Polymerisate. Der Wasserstoffpartialdruck kann dabei zwischen 0,1 und 50 bar gewählt werden. Durch Dotierung des Polymerisationskatalysators mit Übergangsmetallen oder Mischen des Polymerisationskatalysators mit einem übergangsmetallhaltigen Katalysator kann bei einer Durchführung der Polymerisation in Gegenwart von Wasserstoff die Farbzahl noch weiter verbessert werden. Als Übergangsmetalle dienen die Elemente der Gruppen VIIA bis VIIIA des Periodensystems, beispielsweise Ruthenium, Rhenium, Nickel, Eisen, Kobalt, Palladium und/oder Platin.

Das erfindungsgemäße Verfahren kann diskontinuierlich oder kontinuierlich betrieben werden, wobei aus wirtschaftlichen Gründen in der Regel die kontinuierliche Betriebsweise bevorzugt wird.

Bei der diskontinuierlichen Betriebsweise werden die Reaktanden THF, das betreffende Telogen und/oder gewünschtenfalls das Comonomer und der Katalysator im allgemeinen in einem Rührkessel oder Schlaufenreaktor bei den angegebenen Temperaturen solange umgesetzt, bis der gewünschte Umsatz des THF erreicht ist. Die Reaktionsszeit kann in Abhängigkeit von der zugesetzten Katalysatormenge 0,5 bis 40, vorzugsweise 1 bis 30 Stunden betragen. Die Katalysatoren werden zur Polymerisation im allgemeinen in einer Menge von 1 bis 90 Gew.-% , vorzugsweise von 4 bis 70 Gew.-%, und besonders bevorzugt von 8 bis 60 Gew.-%, bezogen auf das Gewicht des eingesetzten THF, zugesetzt.

Bei der kontinuierlichen Betriebsweise kann die Umsetzung in herkömmlichen, für kontinuierliche Verfahren geeigneten Reaktoren oder Reaktoranordnungen in Suspensions- oder Festbettfahrweise ausgeführt werden, bei Suspensionsfahrweise beispielsweise in Schlaufenreaktoren oder Rührreaktoren und bei Festbettfahrweise in Rohrreaktoren oder Festbettreaktoren, wobei die Festbettfahrweise bevorzugt ist.

In der bevorzugten Festbettfahrweise kann der Polymerisationsreaktor in Sumpffahrweise, d.h. das Reaktionsgemisch wird von unten nach oben geführt, oder in Rieselfahrweise, d.h. das Reaktionsgemisch wird von oben nach unten durch den Reaktor geführt, betrieben werden. Das Eduktgemisch (Feed) aus THF und Telogen und/oder Comonomer wird dem Polymerisationsreaktor kontinuierlich zugeführt, wobei die Katalysatorbelastung 0,01 bis 2,0 kg THF/(1*h), bevorzugt 0,02 bis 1,0 kg THF/(1*h) und besonders bevorzugt 0,04 bis 0,5 kg THF/(1*h)beträgt.

Weiterhin kann der Polymerisationsreaktor im geraden Durchgang, d.h. ohne Produktrückführung, oder im Umlauf, d.h. ein Teil des den Reaktor verlassenden Polymerisationsgemischs wird im Kreislauf geführt, betrieben werden. Bei der Umlauffahrweise beträgt das Verhältnis von Umlauf zu Zulauf kleiner oder gleich 150 : 1, bevorzugt kleiner 100 : 1 und bevorzugt kleiner 60 : 1.

Die Konzentration des als Telogen eingesetzten Carbonsäureanhydrids in dem dem Polymerisationsreaktor zugeführten Eduktgemisch liegt zwischen 0,03 bis 30 mol-%, bevorzugt bei 0,5 bis 20 mol-%, besonders bevorzugt bei 1 bis 12 mol-%, bezogen auf das eingesetzte THF.

Wird zusätzlich eine Carbonsäure verwendet, so beträgt das Molverhältnis im Feed üblicherweise 1 : 20 bis 1 : 20000, bezogen auf eingesetztes Carbonsäureanhydrid.

Werden zusätzlich Comonomere verwendet, so beträgt das Molverhältnis im Feed üblicherweise 0,1 bis 60, bevorzugt 0,5 bis 50, besonders bevorzugt 2 bis 40 mol-%, bezogen auf eingesetztes THF.

Wurde die Polymerisation in Suspensionsfahrweise durchgeführt, ist es zur Aufarbeitung des Polymerisationsaustrags erforderlich, den überwiegenden Teil des Polymerisationskatalysator beispielsweise durch Filtration, Dekantieren oder Zentrifugieren vom Polymerisationsgemisch abzutrennen und den erhaltenen Polymerisationsaustrag der weiteren Aufarbeitung zuzuführen. In der bevorzugten Festbettfahrweise wird der Polymerisationsaustrag direkt weiter aufgearbeitet.

Die Aufarbeitung der besonders bevorzugten PTHF-Acetate bzw. THF-Copolymer-Acetate kann nach an sich bekannten Methoden erfolgen. Beispielsweise wird nach destillativer Abtrennung von nicht umgesetztem THF und gegebenenfalls Essigsäureanhydrid, Essigsäure und Comonomer das erhaltene PTHF-Acetat bzw. THF-Copolymer-Acetat basenkatalysiert mit Methanol zu PTHF bzw. THF-Copolymer und Methylacetat umgeestert.

Gewünschtenfalls kann anschließend niedermolekulares PTHF und/oder Tetrahydrofurancopolymer eines mittleren Molekulargewichts von 200 bis 700 Dalton destillativ abgetrennt werden. Üblicherweise können hierbei auch niedermolekulare cyclische Oligomere destillativ abgetrennt werden. Als Destillationsrückstand verbleibt PTHF bzw. THF-Copolymer mit mittleren Molekulargewichten von 650 bis 10.000 Dalton.

Die erfindungsgemäßen Katalysatoren können nach Einsatz in einem diskontinuierlich oder kontinuierlich betriebenen PTHF-Verfahren regeneriert werden, beispielsweise durch Temperaturbehandlung, wie in der EP-A-0 535 515 beschrieben, und/oder durch Waschen des Katalysators mit wässrigen und/oder organischen Lösungsmitteln.

Im folgenden wird die Erfindung anhand von Beispielen näher erläutert.

### Beispiele

Die spezifische Oberfläche der Katalysatoren wurde durch Stickstoff-Adsorption (BET-Mehrpunkt-Methode) gemäß DIN 66131 gemessen.

Die Mesoporosität und die Mesoporenverteilung der Katalysatoren wurde durch Stickstoffdesorption (BJH-N₂-Isotherme Methode) gemäß DIN 66134 bestimmt. Die Daten wurden im Bereich der Porendurchmesser von 2 nm bis 200 nm ausgewertet. Angaben zu Maxima in der Porenradienverteilung beziehen sich auf eine logarithmische Auftragung des Porenradius.

Die Porosität von Katalysator-Formkörpern wurde durch Quecksilberintrusion gemäß DIN 66133 bestimmt. Die Daten wurden im Porenradienbereich von 20A bis 10 µm ausgewertet.

Die Methylenblau-Adsorption wurde nach der Tüpfelmethode gemäß dem Merkblatt "Bindemittelprüfung / Prüfung von Bindetonen" des Vereins Deutscher Giessereifachleute (VDG) bestimmt (Entwurf P 69 E vom Juni 1998).

Die Analyse der Konzentration saurer Zentren des Katalysators erfolgte durch Titration in wässriger Lösung. Zu diesem Zweck wurden 1 bis 2 g Katalysator eingewogen, in 100 ml 0,1 mol/l Natriumnitratlösung suspendiert und unter fortwährendem Rühren mit 0,1 mol/l Natronlauge titriert. Zwischen zwei Zugabeschritten war eine ausreichende Wartezeit erforderlich, bis sich ein konstanter pH-Wert eingestellt hatte (ca. 5 min). Aus der Auftragung der pH-Werte gegen die zugesetzte Menge Natronlauge lassen sich die Konzentration der sauren Zentren und die zugehörigen pKs-Werte ablesen. In den Beispielen ist die Säurezentrendichte bis zu dem in der Titrationskurve erkennbaren Äquivalenzpunkt bei ca. pH-Wert 5 - 7 angegeben.

Zur Bestimmung des Anteils alkalilöslichen Siliciumdioxids wurden 1 g getrocknetes Katalysatorpulver mit 100 ml Sodalösung (2 Gew.-%) versetzt und für 10 Minuten gekocht. Die überstehende Lösung wurde dekantiert und über ein Nutsche von Feinanteilen abfiltriert. Der Rückstand wurde noch zwei Mal mit 25 ml Sodalösung für 2 Minuten gekocht und wiederum dekantiert und filtriert. Schließlich wurde der Rückstand auf die Nutsche gegeben und mit heißer Sodalösung nachgewaschen. Die vereinigten Filtrate wurden auf 0,5 1 aufgefüllt und auf ihren Natriumsilikat-Gehalt analysiert.

Zur Analyse des Säureumsatzes wurde die nach der Aktivierung in der Suspension verbleibende Protonenkonzentration durch Titration bestimmt und zur eingesetzten Menge an Säure in Beziehung gesetzt. Die Endpunktsbestimmung erfolgte über Leitfähigkeitsmessungen (konduktometrisch), da pH-Titrationen neben der restlichen Aktivierungssäure auch sauer reagierende Kationen mit erfassen und daher für diesen Zweck nicht geeignet sind.

Die Bestimmung der austauschbaren Kationen im Rohton erfolgte durch Ionenaustausch mit Ammonium. Zu diesem Zweck wurden 30 g getrockneter Ton mit 300 g NH₄Cl-Lösung (2 mol/kg) für 2 Stunden unter Rückfluss gekocht. Nach 16 Stunden Wartezeit wurde der Ton abgetrennt und mit 0,5 1 deionisiertem Wasser gewaschen. Die Mutterlauge und das Waschwasser wurden auf 1 1 aufgefüllt und die enthaltenen Kationen (Na, K, Mg, Ca) per Elementaranalyse bestimmt. Das Verhältnis der Alkali- und Erdalkaliionen (Summe Na + K bzw. Mg + Ca in Äquivalenten) ist ein Hinweis, ob es sich eher um einen Natriumbentoniten (Verhältnis ca. 1 oder größer) oder einen Calciumbentoniten (Verhältnis deutlich kleiner als 1) handelt.

Die Produktivität des Katalysators (g PTHF-Diacetat/g Katalysator *h) in Pulverform wurde wie folgt analysiert:
In einem 250 ml-Kolben wurden 200 g Tetrahydrofuran und 20 g Essigsäureanhydrid vorgelegt und auf 50°C erwärmt. Unter intensivem Rühren werden 2-3 g bei 120°C getrockneter, fein gepulverter Katalysator mit Korngrößen von mindestens 100 µm hinzugefügt und die Reaktionsmischung weiter bei 50°C intensiv gerührt. Nach 45 min, 2 h, 4 h und 6 h wurden jeweils 20 ml der Reaktionsmischung entnommen und zügig vom Katalysatorpulver durch Filtration abgetrennt. Die vom Katalysator befreiten Proben wurden auf ihren Gehalt an PTHF-Diacetat untersucht, z.B. durch destillative Abtrennung der Leichtsieder und Auswiegen des PTHF-Diacetats. Durch Auswertung der zeitlichen Abhängigkeit der PTHF-Diacetat-Bildung wurde über Extrapolation die Produktivität des Katalysator-Pulvers bestimmt.

Die beschriebenen Beispiele zur Produktivitätsbestimmung lassen sich bezüglich Art und Menge der Telogene und/oder Comonomere, Temperatur, Druck etc. leicht an die jeweiligen Einsatzbedingungen des Katalysators anpassen. Durch Variation von Katalysatormengen und Reaktionszeiten ist weiterhin eine Anpassung der Experimente an verschieden hohe Anfangsproduktivitäten leicht möglich.

### Beispiel 1

Ein Rohbentonit aus Wyoming zeigte folgende Charakteristika: Methylenblau-Adsorption 310 mg/g; Äquivalent-Verhältnis austauschbarer Alkali- zu Erdalkalikationen: 1,1; BET-Oberfläche 34 m²/g. Als Zusammensetzung ergaben sich 9 Gew.- % Feuchtigkeit; 15 Gew.-% Glühverlust; 25,3 Gew.-% Si; 9,5 Gew.-% Al, 2,5 Gew.-% Fe; 1,5 Gew.-% Na; 1,2 Gew.-% Mg sowie 1,0 Gew.-% Ca.

90 g dieses Rohbentoniten wurden in 300g Salzsäure der Konzentration 0,75 mol/kg suspendiert und bei 100°C für 24 gerührt. Anschließend wurden weitere 53 g konzentrierter Salzsäure (32 gew.-%ig) zugegeben und weitere 24 h bei 100°C gerührt. Während der gesamten Aktivierung wurden 7,3 mmol Salzsäure/g Rohton verbraucht.

Nach Absaugen, Auswaschen mit deionisiertem Wasser und Trocknen bei 120°C zeigt der Katalysator eine Säurezentrendichte von 0,37 mmol/g, eine BET-Oberfläche von 227 m²/g und eine Produktivität im Polymerisationstest von 13 g/g*h.

### Beispiel 2

Ein Rohbentonit indischer Herkunft zeigte folgende Charakteristika: Methylenblau-Adsorption 404 mg/g; Äquivalent-Verhältnis austauschbarer Alkali- zu Erdalkalikationen: 1,1; BET-Oberfläche 116 m²/g. Als Zusammensetzung ergeben sich: 14 Gew.- % Feuchtigkeit / 20 Gew.-% Glühverlust; 22,4 Gew.-% Si; 8,9 Gew.-% Al, 6,8 Gew.-% Fe; 1,3 Gew.-% Na; 1,1 Gew.-% Mg sowie je 0,1-1 Gew.-% Ca, Ti und Mn.

20 kg dieses Rohbentoniten wurden in 66,6 kg Schwefelsäure der Konzentration 0,75 mol/kg suspendiert und bei 95 - 98°C für 24 h langsam gerührt. Anschließend wurden 16 kg halbkonzentrierter Schwefelsäure (50 gew.-%ig) zugegeben und weitere 24 h bei 95 bis 98°C-gerührt. Die Suspension wurde mit 70 1 deionisiertem Wasser verdünnt, in einer Filterpresse filtriert und mit ca. 700 1 deionisiertem Wasser gewaschen. Anschließend wurde der Filterkuchen in 32 1 verdünnter Salpetersäure (1 gew.-% ig) resuspendiert, wiederum filtriert und mit 900 1 deionisiertem Wasser gewaschen. Nach dem Trocken werden 12,5 kg Katalysatorpulver erhalten mit einer Säurezentrendichte von 0,40 mmol/g und einer Produktivität im Polymerisationstest von 15 g/g*h. Der Katalysator enthielt 70,6 Gew.-% SiO₂; 10,8 Gew.-% Al₂O₃ und 4,6 Gew.-% Fe₂O₃. An alkalilöslichem SiO₂ enthielt der Katalysator 58 Gew.-%. Die BET-Oberfläche beträgt 403 m²/g, das BJH-N₂-Porenvolumen 0,59 cm³/g, wobei auf Poren im Durchmesserbereich 5 bis 50 nm 0,33 cm³/g entfallen.

### Beispiel 3

210g des Rohbentoniten aus Beispiel 2 wurden in 700g Salzsäure der Konzentration 1,0 mol/kg suspendiert und bei 100°C für 24 gerührt. Anschließend wurden weitere 105 g konzentrierter Salzsäure (32 gew.-% ig) zugegeben und weitere 24 h bei 100°C gerührt. Während der gesamten Aktivierung wurden 8,2 mmol Salzsäure/g Rohton verbraucht.

Nach Absaugen, Auswaschen mit deionisiertem Wasser und Trocknen bei 120°C zeigt der Katalysator eine Säurezentrendichte von 0,44 mol/g, eine BET-Oberfläche von 370 m²/g und eine Produktivität im Polymerisationstest von 15 g/g*h.

### Beispiel 4

35 g des Rohbentoniten aus Beispiel 2 wurden in 700ml Salzsäure der Konzentration 0,6 mol/l suspendiert und bei 100°C für 72 h gerührt. Während der Aktivierung werden rund 8 mmol Salzsäure/g Rohton verbraucht. Nach Absaugen, Auswaschen mit deionisiertem Wasser und Trocknen bei 120°C zeigt der Katalysator eine Säurezentrendichte von 0,38 mmol/g, eine BET-Oberfläche von 357 m²/g und eine Produktivität im Polymerisationstest von 16 g/g*h.

### Beispiel 5

Ein mit Soda voraktivierter Rohbentonit bayerischer Herkunft zeigt folgende Charakteristika: Methylenblau-Adsorption 260 mg/g; Äquivalent-Verhältnis austauschbarer Alkali- zu Erdalkalikationen: 0,9; BET-Oberfläche 84 m²/g. Als Zusammensetzung ergeben sich: 9 Gew.- % Feuchtigkeit / 14 Gew.-% Glühverlust; 25,4 Gew.-% Si; 9,0 Gew.-% Al, 3,5 Gew.-% Fe; 1,7 Gew.-% Mg; 1,2 Gew.-% Na; 1,2 Gew.-% Ca sowie 0,3 Gew.-% Ti.

90g dieses Rohbentoniten wurden in 300 g Salzsäure der Konzentration 0,75 mol/l suspendiert und bei 100°C für 24 h gerührt. Anschließend wurden weitere 63,6 g konzentrierter Salzsäure (32 gew.-% ig) zugegeben und weitere 24 h bei 100°C gerührt. Während der gesamten Aktivierung wurden 8,2 mmol Salzsäure/g Rohton verbraucht.

Nach Absaugen, Auswaschen mit deionisiertem Wasser und Trocknen bei 120°C zeigt der Katalysator eine Säurezentrendichte von 0,26 mmol/g, eine BET-Oberfläche von 312 m2/g und eine Produktivität im Polymerisationstest von 10 g/g*h.

### Vergleichsbeispiel I

150g des Rohbentoniten aus Beispiel 2 wurden in 500 g Salzsäure der Konzentration 3 mol/kg suspendiert und für eine Stunde gerührt. Es wurden 0,4 mmol Säure pro Gramm eingesetztem Ton umgesetzt. Der aktivierte Ton wurde abgesaugt, chloridfrei gewaschen und bei 120°C getrocknet. Der Katalysator zeigt eine Säurezentrendichte von 0,55 mmol/g und eine BET-Oberfläche von 137 m2/g. Die Produktivität des Katalysatorpulvers im Polymerisationstest lag bei 4 g/g*h.

### Vergleichsbeispiel II

150g eines Rohbentoniten entsprechend Beispiel 2 wurden in 500 g Salzsäure der Konzentration 4,5 mol/kg suspendiert und für 72 Stunden bei 100°C gerührt. Der aktivierte Ton wurde abgesaugt, chloridfrei gewaschen und bei 120°C getrocknet. Der Katalysator zeigt eine Säurezentrendichte von ca. 0,02 mmol/g. Die Produktivität des Katalysatorpulvers im Polymerisationstest lag bei 0,5 g/g*h.

### Beispiel 6: kontinuierliche Polymerisation

300 g eines analog Beispiel 3 säureaktivierten Katalysators wurden in einem Laborkneter mit 275 ml Wasser für 10 min verknetet, anschließend zu Strängen mit einem Durchmesser von 2,5 mm extrudiert, getrocknet und schließlich bei 350°C calciniert. Der Katalysator zeigt eine Quecksilber-Porosität von 0,45 cm³/g.

In einer Laborapparatur wurde unter Schutzgas eine Mischung aus THF und Essigsäureanhydrid (6,9 % bezogen auf Gesamt-Feed) bei 45°C über diesen bei 140°C vorgetrockneten Katalysator geleitet, der in einem 250 ml-Reaktor (Innendurchmesser 40 mm) als Festbett angeordnet war. Die Katalysatorbelastung betrug 0,2 kg Feed /(1 Kat.*h). Der Reaktor wurde mit Produktrückführung (ca. 1 1/h) betrieben. Zur Aufarbeitung des PTHF-Diacetats wurde das anfallende Reaktionsgemisch destillativ von nichtumgesetztem THF und Essigsäureanhydrid befreit. Die Eindampfrate ergab sich zu ca. 56 %, das Molekulargewicht des PTHF-Diacetats (Mn) betrug 850 - 900 g/mol.

## Patentansprüche

1. Fester, saurer Katalysator für die Herstellung von Polytetrahydrofuran, Polytetrahydrofuran-Copolymeren, Diestern oder Monoestern dieser Polymere durch Polymerisation von Tetrahydrofuran in Gegenwart mindestens eines Telogens und/oder Comonomers, in Form eines säureaktivierten Tonmaterials, welches mindestens 20 Gew.-% SiO₂ sowie mindestens ein weiteres Oxid eines Elements ausgewählt aus der Gruppe Al, Fe sowie den Gruppen III A bis VII A des Periodensystems aufweist, einen Anteil alkalilöslichen Siliciumdioxids von 20 bis 85 Gew.-% enthält, wobei es sich um einen bei 150 bis 800°C calcinierten Katalysator handelt, der ein N₂-Porenvolumen von mindestens 0,35 cm³/g für Porendurchmesser im Bereich 2 bis 200 nm aufweist, mindestens 0,2 cm³/g dieses N₂-Porenvolumens auf Porendurchmesser im Bereich 5 - 50 nm entfallen, der gemittelte BJH-Porendurchmesser (4V/A) der Poren von 2 bis 200 nm bei 2,0 bis 10,0 nm liegt, eine BET-Oberfläche von mindestens 160 m²/g und eine Säurezentrendichte von mindestens 0,25 mmol/g für pKs-Werte von 1 bis 6 aufweist.

2. Katalysator nach Anspruch 1, **dadurch gekennzeichnet, dass** das für die Aktivierung eingesetzte Tonmaterial einen Methylenblauwert mindestens 250 mg/g aufweist.

3. Katalysator nach einem den Ansprüche 1 oder 2, **dadurch gekennzeichnet, dass** es sich beim Tonmineral um einen NatriumBentoniten handelt.

4. Verfahren zur Herstellung von Polytetrahydrofuran, Polytetrahydrofuran-Copolymeren, Diestern oder Monoestern dieser Polymere, **dadurch gekennzeichnet, dass** Tetrahydrofuran in Gegenwart mindestens eines Telogens und/oder Comonomeren und unter Einsatz eines Katalysators nach einem der Ansprüche 1 bis 3 polymerisiert wird.

5. Verfahren nach Anspruch 4, **dadurch gekennzeichnet, dass** Tetrahydrofuran in Gegenwart von Carbonsäureanhydriden, vorzugsweise Essigsäureanhydrid, zu Polytetrahydrofuran oder Derivaten und Copolymeren davon mit Molekulargewichten von 250 bis 10000 Dalton polymerisiert wird.

## Claims

1. A solid, acid catalyst for the preparation of polytetrahydrofuran, polytetrahydrofuran copolymers, diesters or monoesters of these polymers by polymerization of tetrahydrofuran in the presence of at least one telogen and/or comonomer, in the form of an acid-activated clay material which comprises at least 20% by weight of SiO₂ and at least one further oxide of an element selected from the group consisting of Al, Fe and the groups III A to VII A of the Periodic Table, has a proportion of alkali-soluble silicon dioxide of from 20 to 85% by weight, where the catalyst is a catalyst which has been calcined at from 150 to 800°C and has an N₂ pore volume of at least 0.35 cm³/g for pore diameters in the range from 2 to 200 nm, with at least 0.2 cm³/g of this N₂ pore volume being made up by pores having diameters in the range 5-50 nm and the mean BJH pore diameter (4V/A) of the pores in the range from 2 to 200 nm being from 2.0 to 10.0 nm, has a BET surface area of at least 160 m²/g and has an acid center density of at least 0.25 mmol/g for pKₐ values of from 1 to 6.

2. The catalyst according to claim 1, wherein the clay material used for the activation has a methylene blue value of at least 250 mg/g.

3. The catalyst according to either of claims 1 and 2, wherein the clay mineral is a sodium bentonite.

4. A process for preparing polytetrahydrofuran, polytetrahydrofuran copolymers, diesters or monoesters of these polymers, which comprises polymerizing tetrahydrofuran in the presence of at least one telogen and/or comonomer and in the presence of a catalyst according to any of claims 1 to 3.

5. The process according to claim 4, wherein tetrahydrofuran is polymerized in the presence of carboxylic anhydrides, preferably acetic anhydride, to give polytetrahydrofuran or derivatives and copolymers thereof having molecular weights of from 250 to 10000 dalton.

## Revendications

1. Catalyseur acide, solide, pour la préparation de polytétrahydrofuranne, de copolymères de polytétrahydrofuranne, de diesters ou monoesters de ces polymères, par polymérisation de tétrahydrofuranne en présence d'au moins un télogène et/ou de comonomères, sous forme d'une matière argileuse activée par un acide, qui comporte au moins 20 % en poids de SiO₂ ainsi qu'au moins un autre oxyde d'un élément choisi dans le groupe Al, Fe ainsi que les groupes III A à VII A du système périodique, contient une proportion de 20 à 85 % en poids de dioxyde de silicium soluble dans les solutions alcalines, le catalyseur étant un catalyseur calciné à 150-800 °C, qui présente un volume de pores N₂ d'au moins 0,35 cm³/g pour des diamètres de pores dans la plage de 2 à 200 nm, au moins 0,2 cm³/g de ce volume de pores N₂ revenant aux diamètres de pores dans la plage de 5 à 50 nm, le diamètre moyen de pore BJH (Barrett-Joyner-Halenda) (4V/A) des pores de 2 à 200 nm allant de 2,0 à 10,0 nm, et présente une surface BET d'au moins 160 m²/g et une densité de centres acides d'au moins 0,25 mmole/g pour des pKa de 1 à 6.

2. Catalyseur selon la revendication 1, **caractérisé en ce que** la matière argileuse utilisée pour l'activation présente un indice de bleu de méthylène d'au moins 250 mg/g.

3. Catalyseur selon la revendication 1 ou 2,
**caractérisé en ce que** la matière argileuse est une bentonite sodique.

4. Procédé pour la préparation de polytétrahydrofuranne, de copolymères de polytétrahydrofuranne, de diesters ou monoesters de ces polymères, **caractérisé en ce que** le tétrahydrofuranne est polymérisé en présence d'au moins un télogène et/ou de comonomères et avec utilisation d'un catalyseur selon l'une quelconque des revendications 1 à 3.

5. Procédé selon la revendication 4, **caractérisé en ce que** le tétrahydrofuranne est polymérisé en présence d'anhydrides d'acides carboxyliques, de préférence d'anhydride acétique, en polytétrahydrofuranne ou dérivés et copolymères de celui-ci, ayant des masses moléculaires de 250 à 10 000 daltons.
